# FASCICULE DE BREVET EUROPEEN

(11) **EP 1 403 468 B1**
(45) Date de publication et mention de la délivrance du brevet: **20.07.2005**
(21) Numéro de dépôt: 03103540.5
(22) Date de dépôt: 24.09.2003
(51) Int. Cl.: F01D 21/04, F16B 31/02

(54) **Dispositif découpleur en traction**
Vorrichtung zum Loskoppeln unter Zugkraft
Decoupling device under tensile force

(30) Priorité: 26.09.2002 FR 0211894
(43) Date de publication de la demande: 31.03.2004
(73) Titulaire: SNECMA MOTEURS, 75015 Paris (FR)
(72) Inventeur: BOUCHY, Gael, 77540, LA CHAPELLE IGER (FR); VASSEUR, Pascal, 77000, VAUX LE PENIL (FR)
(74) Mandataire: Poulin, Gérard

(56) Documents cités:
- EP-A- 0 723 093
- FR-A- 1 447 644
- FR-A- 2 752 024
- GB-A- 565 839
- US-A- 4 543 074
- US-A- 4 691 988

## Description

### DOMAINE TECHNIQUE

La présente invention se rapporte à un dispositif découpleur à vis en traction, destiné notamment à équiper un support de palier d'arbre de soufflante dans un turboréacteur.

### ETAT DE LA TECHNIQUE ANTERIEURE

Un dispositif découpleur à vis en traction est déjà mis en oeuvre dans le document FR 2 752 024.

Ce document décrit un support de palier qui maintient un roulement. Le support de palier est fixé à un carter intermédiaire par une bride associée à un ensemble de vis d'assemblage toutes parallèles à l'axe moteur.

Lorsque le support de palier est soumis à une charge importante, due à un balourd consécutif à la rupture d'une aube, ladite charge est empêchée d'être transmise au carter intermédiaire puis au reste de la structure grâce à la présence d'un dispositif découpleur disposé entre ledit support de palier et ledit carter intermédiaire.

Un premier mode de réalisation du FR 2 752 024 prévoit que le découplage se produit par rupture des vis d'assemblage entre le support de palier et le carter intermédiaire. A cet effet, lesdites vis présentent une zone détourée ou zone de fragilité locale, et sont appelées « vis fusibles ».

Le dispositif découpleur est constitué par la combinaison de la bride et des vis d'assemblage.

Un deuxième mode de réalisation du FR 2 752 024 prévoit que le découplage se produit par rupture d'une zone arrière du support de palier, située à proximité de la liaison dudit support de palier avec le carter intermédiaire. A cet effet, la zone de rupture du support de palier présente une zone de fragilité. Les vis d'assemblage entre le support de palier et le carter intermédiaire sont dans ce cas des vis ordinaires, et ne sont pas destinées à se rompre.

Le balourd soumet l'arbre à un effort radial cyclique, qui est converti, de par la géométrie et le dimensionnement du support de palier, en un effort axial cyclique qui agit en traction sur la zone de fragilité du dispositif découpleur. Dans les deux modes de réalisation du FR 2 752 024, la zone de fragilité est adaptée, notamment de par ses dimensions, pour se rompre lorsque la charge appliquée atteint ou dépasse une valeur de charge prédéterminée.

En pratique, il est non seulement souhaitable que le dispositif découpleur se rompe sous l'effet d'un balourd important, mais il est également souvent souhaitable qu'il soit capable de résister pendant une certaine durée sous l'effet d'un balourd modéré.

En pratique, un balourd important peut être dû à une perte d'aube, il est alors souhaitable que le découplage ait lieu ; un balourd modéré peut être dû à l'ingestion d'un oiseau par le turbo-réacteur, il est alors souhaitable que le dispositif découpleur résiste à ce balourd modéré, pour éviter que ne se produise trop souvent le découplage.

En effet, lorsque le dispositif découpleur est soumis à une charge supérieure à la charge prédéterminée, il cède par rupture des vis. Mais lorsqu'il est soumis à une charge inférieure à ladite charge prédéterminée, il ne cède pas, mais peut être éventuellement endommagé si la charge est suffisante pour provoquer des détériorations locales ou des déformations de ses éléments constitutifs : vis fusibles et/ou bride, et sa durée de vie s'en trouve réduite.

Cette condition de résistance à la fatigue doit être de préférence remplie sans que la robustesse du dispositif découpleur n'en soit affectée.

Le dispositif découpleur décrit dans le FR 2 752 024 ne permet pas au constructeur de maîtriser séparément la résistance à la fatigue des vis et leur résistance à la traction pure avant rupture. En d'autres termes, il n'est pas possible de prévoir la résistance à la fatigue de ce dispositif découpleur, sans agir également sur sa résistance à la rupture en traction. Cela représente un inconvénient majeur du dispositif découpleur de l'art antérieur.

### EXPOSÉ DE L'INVENTION

La présente invention est un perfectionnement du premier mode de réalisation du dispositif découpleur décrit dans le document FR 2 752 024, qui concerne un dispositif découpleur à vis sollicitées en traction.

Le but de la présente invention est de proposer un dispositif découpleur en traction, qui ne présente pas les inconvénients des dispositifs de l'art antérieur rappelés ci-dessus.

Un objet de l'invention consiste à pouvoir augmenter la résistance à la fatigue d'un dispositif découpleur donné qui est prévu pour céder lorsqu'il est soumis à une charge donnée.

Selon l'invention, le dispositif découpleur en traction, reliant deux pièces d'une structure et muni d'organes de rupture dont la rupture provoque le découplage desdites pièces, est caractérisé en ce qu'il comprend :
- un premier ensemble de premiers organes de rupture, dits organes de rupture fusibles, disposés de manière à être parallèles entre eux,
- un deuxième ensemble de deuxièmes organes de rupture, dits organes de rupture structuraux, disposés de manière à être parallèles entre eux et parallèles aux premiers organes de rupture fusibles,
et en ce que lesdits premiers organes de rupture fusibles et lesdits deuxièmes organes de rupture structuraux sont prévus pour se rompre lorsque la charge appliquée au dispositif découpleur atteint ou dépasse une valeur de charge prédéterminée, et lesdits deuxièmes organes de rupture structuraux sont prévus pour résister en fatigue tant que ladite charge appliquée n'atteint pas ladite valeur de charge prédéterminée.

Selon un mode de réalisation préféré de l'invention, les organes de rupture sont des vis fusibles et des vis structurales.

Selon un aspect de l'invention, le dispositif découpleur est caractérisé en ce que les premières vis fusibles comprennent entre leur tête et leur filetage une zone de fragilité servant d'amorce de rupture en traction.

Selon un autre aspect de l'invention, les deuxièmes vis structurales présentent une géométrie plus massive et une raideur plus élevée que celles des premières vis fusibles.

Selon un autre mode de réalisation de l'invention, les organes de rupture sont des rivets fusibles et des rivets structuraux.

Selon encore un autre mode de réalisation de l'invention, les organes de rupture sont des boulons fusibles et des boulons structuraux.

Le dispositif découpleur selon l'invention présente comme avantage qu'il devient possible pour le constructeur de concevoir des structures utilisant des matériaux plus légers et/ou moins coûteux, comme par exemple l'aluminium.

### BRÈVE DESCRIPTION DES DESSINS

D'autres aspects et avantages de l'invention apparaîtront à la lecture de la description détaillée d'un mode de réalisation préféré, mais non limitatif, qui va suivre, en relation avec les dessins annexés, dans lesquels :
- la figure 1 est une vue en coupe longitudinale d'une portion de turboréacteur illustrant un environnement général de l'invention ;
- la figure 2 est une vue agrandie d'une partie de la figure précédente, toujours en coupe longitudinale, montrant plus précisément la mise en oeuvre de l'invention ;
- la figure 3 illustre, en coupe longitudinale, une vis fusible selon l'invention ;
- la figure 4 illustre, en coupe longitudinale, la bride et une vis structurale selon l'invention ;
- les figures 5, 6 et 7 illustrent quant à elles des variantes de répartition des vis fusibles et des vis structurales sur le pourtour de la bride.

### EXPOSÉ DÉTAILLÉ D'UN MODE DE REALISATION DE L'INVENTION

L'invention va être décrite par l'illustration d'un mode de réalisation préféré, dans lequel les organes de rupture sont des vis fusibles et des vis structurales.

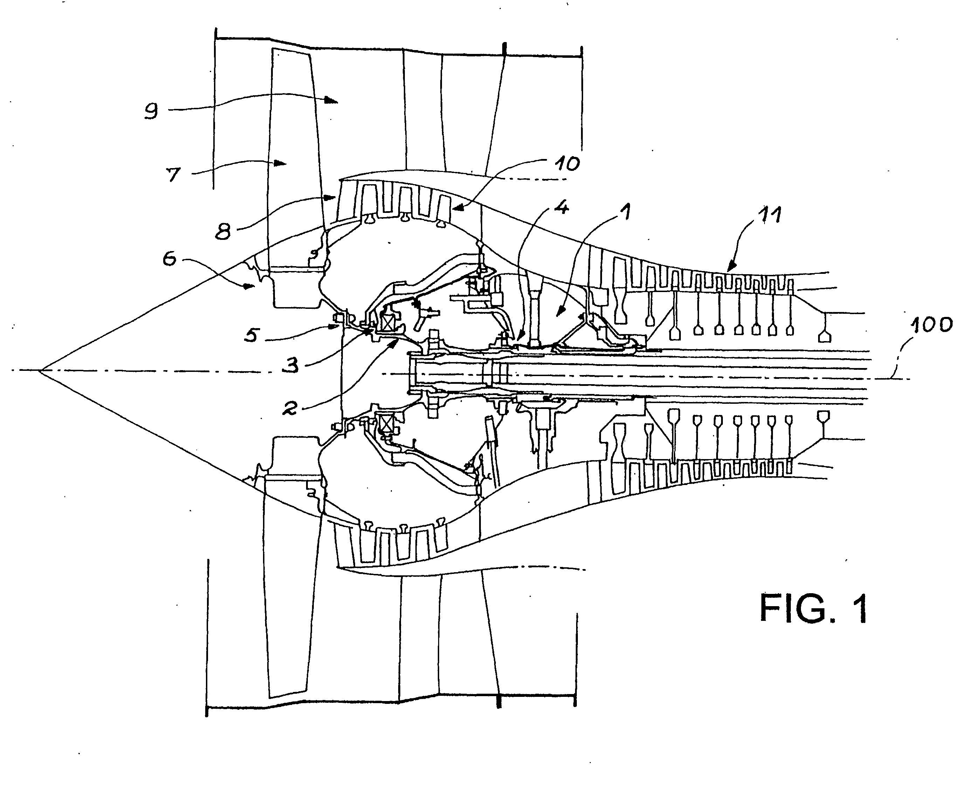

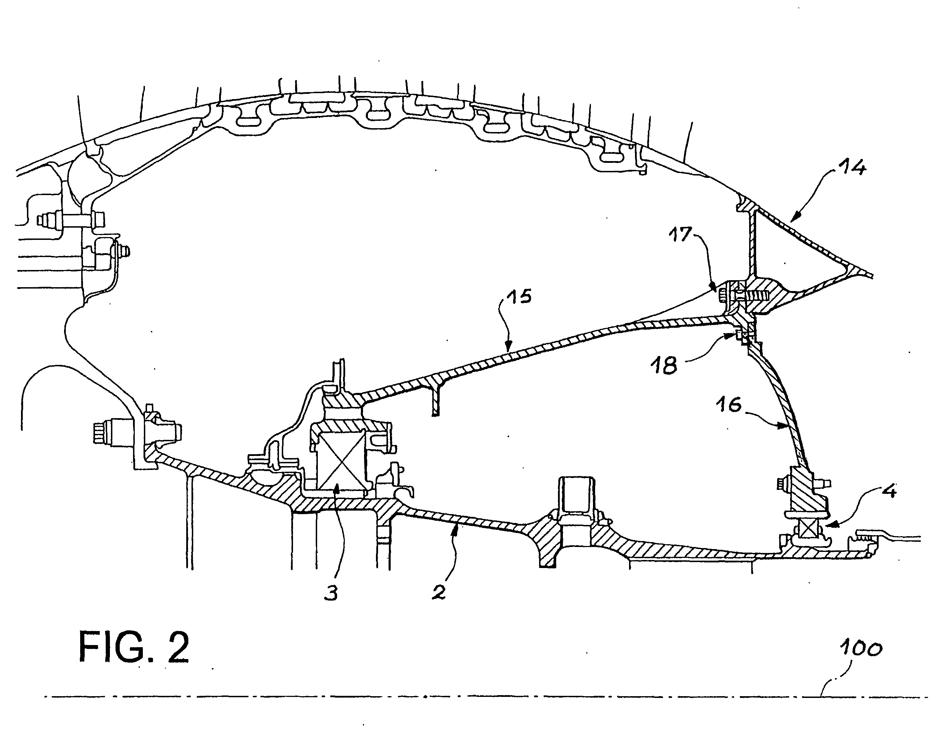

Les figures 1 et 2 illustrent un exemple d'environnement dans lequel peut être mis en oeuvre le dispositif découpleur de l'invention.

En se référant tout d'abord à la figure 1, une soufflante 6 de turboréacteur d'axe 100 entraînée et supportée par un arbre tournant 2 est située à l'avant d'une ligne d'arbres à basse pression 1. La soufflante 6 est munie d'aubes 7 qui s'étendent devant l'entrée d'une veine interne 8 ou veine principale d'écoulement des gaz, et devant l'entrée d'une veine externe 9, entourant la veine interne 8 et qu'emprunte l'air de dilution des gaz. Un compresseur à basse pression 10 et un compresseur à haute pression 11 sont situés dans la veine interne 8.

L'arbre tournant 2 porte la soufflante 6 à son bout avant 5 et s'étend en arrière à partir de la soufflante 6, l'arbre 2 étant soutenu par un premier palier 3 en arrière de la soufflante 6 et par un deuxième palier 4 en arrière du premier palier 3.

En se référant maintenant à la figure 2, le premier palier 3 est porté par une enveloppe 15 entourant l'arbre 2 et s'étendant en arrière du premier palier 3 jusqu'à un carter intermédiaire 14, auquel l'enveloppe 15 est reliée par une liaison 17. Le palier arrière 4 est porté par un support 16, lui-même relié à l'enveloppe 15 par une liaison 18.

Si une aube 7 de la soufflante 6 se rompt, un balourd important se produit sur l'arbre 2, ce qui génère des charges cycliques et des vibrations que le premier palier 3 de support de l'arbre 2 communique aux parties fixes de la machine avec d'importants risques de détériorations.

La liaison 18 entre l'enveloppe 15 et le support 16 du palier arrière 4 est réalisée par un assemblage de vis usuelles.

La liaison 17 entre l'enveloppe 15 et le carter intermédiaire 14 est réalisée au moyen d'un dispositif découpleur selon la présente invention.

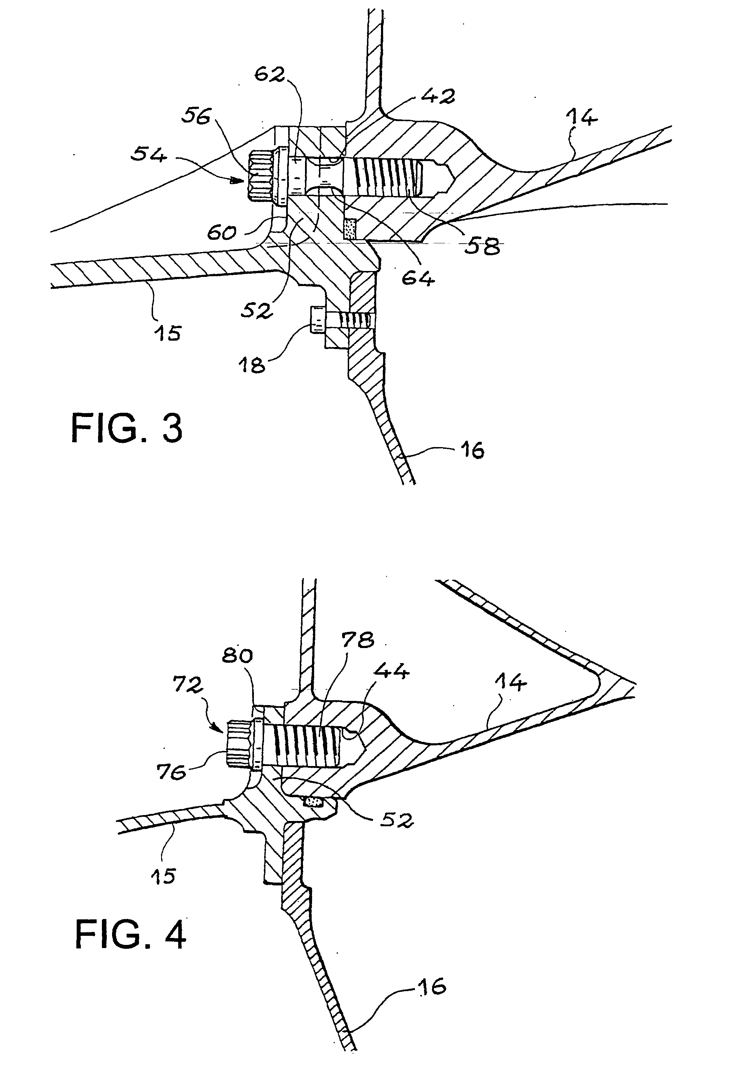

Ce dispositif découpleur va être décrit en référence aux figures 3 et 4. Il comprend une bride 52 solidaire de l'extrémité arrière de l'enveloppe 15.

La bride 52 présente une forme sensiblement circulaire centrée sur l'axe 100, et elle est disposée sensiblement perpendiculaire audit axe 100.

La bride 52 est munie de premiers orifices traversants 42 dans lesquels sont insérées des premières vis d'assemblage 54, et de deuxièmes orifices traversants dans lesquels sont insérées des deuxièmes vis d'assemblage 72. Les dimensions des orifices traversants 42, 44 sont bien sûr adaptées aux dimensions des vis 54, 72 qu'ils reçoivent.

La bride 52 est dimensionnée de manière à ce que l'effort transmis aux vis soit un effort de traction pur.

Les vis 54, 72 constituent les moyens de découplage du dispositif découpleur. Elles sont de deux types différents, et présentent des géométries et dimensions différentes, pour remplir des fonctions différentes.

Un premier ensemble de vis est constitué de vis dites vis fusibles 54, qui sont dimensionnées pour se rompre en réponse à une sollicitation donnée en traction.

Elles sont illustrées à la figure 3 et sont sensiblement analogues aux vis fusibles décrites dans le FR 2 752 024.

Les vis fusibles 54 présentent une tête de vis 56, un filetage 58, une partie lisse 62 située entre la tête 56 et le filetage 58, et une zone de fragilité ou zone affaiblie, appelée aussi zone fusible 64, qui est dimensionnée en fonction de la valeur de la charge prédéterminée qui doit provoquer la rupture desdites vis fusibles 54. En service, le filetage 58 des vis fusibles 54 est engagé dans un taraudage du carter intermédiaire 14 et leur tête 56 s'appuie sur une surface libre 60 de la bride 52. Toujours en service, la zone fusible 64 se trouve à l'intérieur de l'orifice traversant 42 de la bride 52 dans lequel la vis fusible 54 est engagée. La zone fusible 64 est obtenue par exemple par restriction de diamètre, comme illustré sur la figure 3. On peut aussi l'obtenir par perçage et/ou par affaiblissement de la résistance mécanique à la rupture en la soumettant à un traitement particulier, comme par exemple un traitement thermique local par trempe locale.

Un deuxième ensemble de vis est constitué de vis dites vis structurales 72. Elles sont également dimensionnées pour se rompre en réponse à une sollicitation donnée en traction, mais aussi pour résister tant que ladite sollicitation ne dépasse pas une certaine valeur également prédéterminée. Les vis structurales 72 sont donc capables de résister à la fatigue, pour une certaine valeur de charge appliquée, contrairement aux vis fusibles 54.

Les vis structurales 72 sont illustrées à la figure 4. Elles présentent une tête de vis 76 et un filetage 78. Contrairement aux vis fusibles 54, elles ne présentent pas de zone de fragilité, et donc leur filetage 78 s'étend de préférence sensiblement sur toute la longueur du corps de vis. En service, le filetage 78 des vis structurales 72 est engagé dans un taraudage du carter intermédiaire 14 et leur tête 76 s'appuie sur une surface libre 80 de la bride 52.

Les vis structurales 72 sont plus massives que les vis fusibles 54, et notamment leur diamètre de corps de vis est supérieur à celui des vis fusibles 54. Elles présentent également des raideurs plus élevées que les raideurs des vis fusibles 54, par exemple deux fois plus élevées.

C'est principalement à travers les vis structurales 72 que les efforts provenant de l'arbre 2 sont transmis vers le carter intermédiaire 14. Les efforts transmis sont essentiellement des efforts axiaux, les efforts de cisaillement étant principalement repris par les centrages des vis structurales 72.

On va maintenant décrire en détail le comportement du dispositif découpleur de l'invention dans diverses situations possibles, et en comparaison avec l'art antérieur.

On considère tout d'abord une première situation dans laquelle la structure est soumise à un balourd modéré, la charge appliquée étant inférieure à la charge prédéterminée qui provoque la rupture du dispositif découpleur. Avec un dispositif découpleur conforme à l'art antérieur, c'est à dire en l'absence de vis structurales 72, on assisterait à un allongement des vis fusibles 54 par déformation élastique puis éventuellement plastique sous l'effet de l'effort axial de traction, sans que cette déformation ne conduise à la rupture des vis fusibles 54. Si la déformation plastique des vis fusibles 54 est importante, la bride 52 peut à son tour se déformer et/ou se décoller du carter intermédiaire 14, ce qui est néfaste à la tenue mécanique du dispositif découpleur. Avec un dispositif découpleur conforme à l'invention, c'est à dire comprenant une combinaison de vis fusibles 54 et de vis structurales 72, les vis structurales 72 ne sont que peu allongées, ou pas allongées du tout. Cela permet d'éviter, tout au moins de limiter, la déformation et/ou le décollement de la bride 52.

Par conséquent, la présence des vis structurales 72 a pour effet d'améliorer la résistance en fatigue du dispositif découpleur et d'allonger sa durée de vie tant que la charge appliquée reste inférieure à la charge prédéterminée qui provoque la rupture des vis fusibles 54.

On considère maintenant une deuxième situation dans laquelle la structure est soumise à un balourd important, la charge appliquée étant supérieure ou égale à la charge prédéterminée qui provoque la rupture du découpleur. Avec un dispositif découpleur conforme à l'art antérieur, c'est à dire en l'absence de vis structurales 72, on assisterait à un allongement des vis fusibles 54 par déformation plastique sous l'effet de l'effort axial de traction, jusqu'à rupture desdites vis fusibles 54, conformément à ce qui est décrit dans le FR 2 752 024. Avec un dispositif découpleur conforme à l'invention, c'est-à-dire comprenant à la fois des vis fusibles 54 et des vis structurales 72, on assiste cette fois, pour une charge appliquée supérieure ou égale à la valeur de charge prédéterminée, à un allongement des vis fusibles 54 et des vis structurales 72 par déformation plastique sous l'effet de l'effort axial de traction. Il s'ensuit un décollement de la bride 52, qui provoque en conséquence une charge soudaine dans les vis fusibles 54. Celles-ci cèdent alors les unes après les autres ou simultanément. Il s'ensuit une surcharge sur les vis structurales 72 qui cèdent à leur tour. Le découplage a eu lieu.

Par conséquent, la présence des vis structurales 72 n'entrave pas le rôle du dispositif découpleur lorsqu'il est soumis à une charge qui est supérieure à la charge prédéterminée qui provoque la rupture.

Dans les dispositifs découpleurs de l'art antérieur, la limite en rupture élastique du dispositif découpleur est fournie par la limite en rupture élastique des vis fusibles. Dans les dispositifs découpleurs selon l'invention, la limite en rupture élastique du dispositif découpleur est maintenant fournie par la limite en rupture élastique des vis structurales. La présence des vis structurales permet donc d'augmenter la limite en rupture élastique du découpleur. Par exemple, on peut dimensionner les vis fusibles 54 et les vis structurales 72 pour que la limite en rupture élastique du dispositif selon l'invention soit supérieure de 40% à la limite en rupture élastique du dispositif découpleur selon l'art antérieur.

On a vu que les vis fusibles 54 sont dimensionnées de manière à prédéterminer la valeur de l'effort axial de traction, et donc de la charge appliquée en amont, qui provoque le découplage. Par ailleurs, les vis fusibles 54 et structurales 72 subissent un pré-serrage adapté lors de leur installation, de sorte que les vis structurales 72 ne cèdent pas avant les vis fusibles 54.

Un aspect important des dispositifs découpleurs conformes à l'invention réside dans les rôles respectifs des vis fusibles et des vis structurales. Dans les dispositifs de l'art antérieur, la rupture du dispositif découpleur est provoquée par la rupture des vis fusibles, et la limite en fatigue du dispositif découpleur est fournie par le décollement de la bride maintenue par les mêmes vis fusibles. Dans les dispositifs découpleurs selon l'invention, la rupture du dispositif découpleur est toujours provoquée par la rupture des vis fusibles 54, alors que la limite en fatigue du dispositif découpleur est fournie cette fois par le décollement de la bride maintenue par les vis structurales 72.

Par conséquent, avec un dispositif découpleur conforme à l'invention, comportant à la fois des vis fusibles 54 et des vis structurales 72, il est avantageusement possible de piloter séparément la rupture du dispositif découpleur et la limite en fatigue du dispositif découpleur.

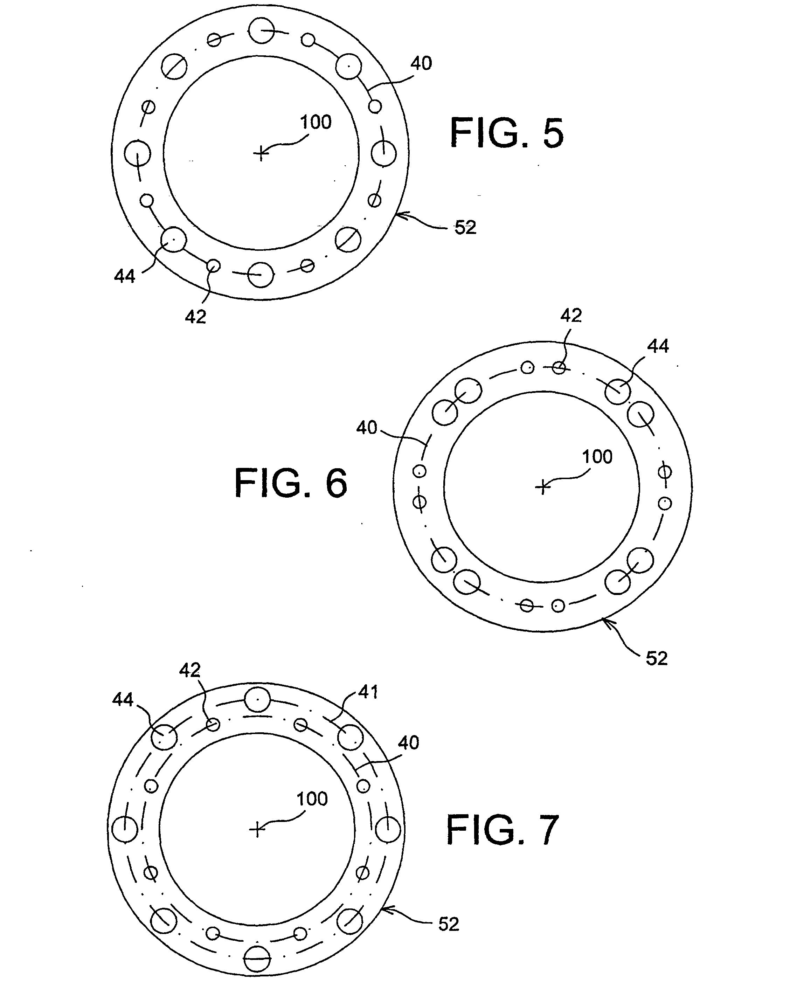

On va maintenant décrire des exemples de disposition et de répartition des vis fusibles 54 et des vis structurales 72 en relation avec les figures 5 à 7.

De préférence, les orifices traversants 42 prévus pour les premières vis fusibles 54 et les orifices traversants 44 prévus pour les deuxièmes vis structurales 72 sont disposés sur une ligne moyenne circulaire 40 de la bride 52, selon une répartition alternée.

Selon une première variante de réalisation illustrée à la figure 5, ladite répartition alternée est telle que chaque orifice 42 pour vis fusible 54 se trouve situé entre deux orifices 44 pour vis structurales 72, et de la même façon chaque orifice traversant 44 pour vis structurale 72 se trouve situé entre deux orifices traversants 42 pour vis fusibles 54.

Selon une deuxième variante de réalisation illustrée à la figure 6, ladite répartition alternée est telle que les orifices traversants 42 pour vis fusibles 54 et les orifices traversants pour vis structurales 72 sont regroupés par paires, chaque paire d'orifices traversants 42 pour vis fusibles 54 se trouvant située entre deux paires d'orifices traversants 44 pour vis structurales 72, et de la même façon chaque paire d'orifices traversants 44 pour vis structurales 72 se trouvant située entre deux paires d'orifices traversants 42 pour vis fusibles 54.

D'autres variantes de l'alternance des orifices traversants 42 pour vis fusibles 54 et des orifices traversants 44 pour vis structurales 72 peuvent bien sûr être envisagées.

Selon une variante (non représentée), la répartition des vis peut se faire selon des zones de plusieurs vis fusibles 54 alternant avec des zones de plusieurs vis structurales 72.

Selon une troisième variante de réalisation illustrée à la figure 7, ladite répartition alternée est telle que les orifices traversants 42 pour vis fusibles 54 sont répartis sur une première ligne moyenne 40 de la bride 52, et les orifices traversants pour vis structurales 72 sont répartis sur une deuxième ligne moyenne 41 de la bride 52, la deuxième ligne moyenne 41 étant concentrique à la première ligne moyenne 40, en allant vers l'axe 100 ou bien en s'éloignant de celui-ci.

On peut également envisager d'autres modes de répartition qui combinent des variantes d'alternances et/ou d'éloignement par rapport à l'axe 100.

D'autre part, bien qu'on vienne de décrire trois variantes de répartitions selon lesquelles le nombre de vis fusibles 54 et le nombre de vis structurales 72 sont identiques, on peut encore envisager d'autres variantes de répartition avec un nombre de vis fusibles 54 qui soit supérieur au nombre de vis structurales 72 ou encore un nombre de vis fusibles 54 qui soit inférieur au nombre de vis structurales 72.

Le choix du mode de répartition des deux types de vis et/ou le choix de leur nombre est chaque fois effectué en fonction des effets recherchés.

L'invention qui vient d'être décrite n'est pas limitée à un dispositif découpleur pour lequel l'assemblage de pièces est réalisé au moyen de vis fusibles et de vis structurales, mais peut aussi être étendue à d'autres modes de réalisation pour lesquels les moyens de découplage ne sont pas des vis, mais des ensembles de rivets fusibles et de rivets structuraux, ou encore des ensembles de boulons fusibles et de boulons structuraux.

## Revendications

1. Dispositif découpleur en traction, reliant deux pièces (14, 15) d'une structure et muni d'organes de rupture (54, 72) dont la rupture provoque le découplage desdites pièces (14, 15), **caractérisé en ce qu'**il comprend
- un premier ensemble de premiers organes de rupture, dits organes de rupture fusibles (54), disposés de manière à être parallèles entre eux,
- un deuxième ensemble de deuxièmes organes de rupture, dits organes de rupture structuraux (72), disposés de manière à être parallèles entre eux et parallèles aux premiers organes de rupture fusibles (54),
et **en ce que** lesdits premiers organes de rupture fusibles (54) et lesdits deuxièmes organes de rupture structuraux (72) sont prévus pour se rompre lorsque la charge appliquée au dispositif découpleur atteint une valeur de charge prédéterminée, et lesdits deuxièmes organes de rupture structuraux (72) sont prévus pour résister en fatigue tant que ladite charge appliquée n'atteint pas ladite valeur de charge prédéterminée.

2. Dispositif découpleur selon la revendication 1, **caractérisé en ce que** le nombre d'organes de rupture fusibles (54) est identique au nombre d'organes de rupture structuraux (72).

3. Dispositif découpleur selon la revendication 1, **caractérisé en ce que** le nombre d'organes de rupture fusibles (54) est supérieur au nombre d'organes de rupture structuraux (72).

4. Dispositif découpleur selon la revendication 1, **caractérisé en ce que** le nombre d'organes de rupture fusibles (54) est inférieur au nombre d'organes de rupture structuraux (72).

5. Dispositif découpleur selon l'une quelconque des revendications 1 à 4, **caractérisé en ce que** les organes de rupture fusibles et les organes de rupture structuraux sont répartis sur une bride circulaire (52), et **en ce que** les organes de rupture fusibles (54) et les organes de rupture structuraux (72) suivent une répartition alternée régulière le long d'au moins une ligne moyenne (40, 41) de ladite bride (52) .

6. Dispositif découpleur selon la revendication 5, **caractérisé en ce que** chaque organe de rupture fusible (54) est située entre deux organes de rupture structuraux (72).

7. Dispositif découpleur selon la revendication 5, **caractérisé en ce que** les organes de rupture fusibles (54) sont regroupés par paires et les organes de rupture structuraux (72) sont regroupés par paires, et chaque paire d'organes de rupture fusibles (54) est située entre deux paires d'organes de rupture structuraux (72).

8. Dispositif découpleur selon l'une quelconque des revendications 5 à 7, **caractérisé en ce que** tous les organes de rupture, fusibles (54) et structuraux (72), sont répartis le long d'une même ligne moyenne (40) de la bride (52).

9. Dispositif découpleur selon l'une quelconque des revendications 5 à 7, **caractérisé en ce que** tous les organes de rupture fusibles (54) sont situés sur une première ligne moyenne (40) de la bride (52) et **en ce que** tous les organes de rupture structuraux (72) sont situés sur une deuxième ligne moyenne (41) de la bride (52), les deux lignes moyennes (40, 41) étant concentriques.

10. Dispositif découpleur selon l'une quelconque des revendications 1 à 9, **caractérisé en ce que** les organes de rupture structuraux (72) présentent une raideur plus élevée que celle des organes de rupture fusibles (54).

11. Dispositif découpleur selon l'une quelconque des revendications 1 à 10, **caractérisé en ce que** les organes de rupture structuraux (72) présentent une géométrie plus massive que celle des organes de rupture fusibles (54).

12. Dispositif découpleur selon l'une quelconque des revendications 1 à 11, **caractérisé en ce que** les premiers organes de rupture fusibles sont des premières vis fusibles (54) et les deuxièmes organes de rupture structuraux sont des deuxièmes vis structurales (72) .

13. Dispositif découpleur selon la revendication 12, **caractérisé en ce que** les premières vis fusibles (54) comprennent entre leur tête (56) et leur filetage (58) une zone de fragilité (64) servant d'amorce de rupture en traction.

14. Dispositif découpleur selon la revendication 13, **caractérisé en ce que** la zone de fragilité (64) comprend une portion de section réduite.

15. Dispositif découpleur selon la revendication 13, **caractérisé en ce que** la zone de fragilité (64) comprend une portion sur laquelle a été effectué un enlèvement de matière par perçage.

16. Dispositif découpleur selon la revendication 13, **caractérisé en ce que** la zone de fragilité (64) est obtenue par application d'un traitement thermique local.

17. Dispositif découpleur selon l'une quelconque des revendications 1 à 11, **caractérisé en ce que** les premiers organes de rupture fusibles sont des premiers rivets fusibles et les deuxièmes organes de rupture structuraux sont des deuxièmes rivets structuraux.

18. Dispositif découpleur selon l'une quelconque des revendications 1 à 11, **caractérisé en ce que** les premiers organes de rupture fusibles sont des premiers boulons fusibles et les deuxièmes organes de rupture structuraux sont des deuxièmes boulons structuraux.

## Patentansprüche

1. Entkoppelungsvorrichtung, die zwei Teile (14,15) einer Struktur verbindet und mit Trennelementen (54,72), deren Trennung bzw. Zerreißen die Entkoppelung der Teile (14,15) hervorruft, versehen ist, **dadurch gekennzeichnet, dass** sie umfasst:
- eine erste Einheit erster Trennelemente, sogenannter schmelzbarer Trennelemente (54), die parallel zueinander angeordnet sind,
- eine zweite Einheit zweiter Trennelemente, sogenannter struktureller Trennelemente (72), die parallel zueinander und parallel zu den ersten schmelzbaren Trennelementen (54) angeordnet sind,
und dass die ersten schmelzbaren Trennelemente (54) und die zweiten strukturellen Trennelemente (72) so vorgesehen sind, dass sie zerbrechen bzw. reißen, wenn die auf die Entkoppelungsvorrichtung aufgebrachte Last einen vorbestimmten Lastwert erreicht, und die zweiten strukturellen Trennelemente (72) so vorgesehen sind, dass sie in ihrer Materialermüdung so lange widerstehen als die aufgebrachte Last nicht den vorbestimmten Lastwert erreicht.

2. Entkopplungsvorrichtung nach Anspruch 1, **dadurch gekennzeichnet, dass** die Anzahl schmelzbarer Trennelemente (54) identisch zur Anzahl struktureller Trennelemente (72) ist.

3. Entkopplungsvorrichtung nach Anspruch 1, **dadurch gekennzeichnet, dass** die Anzahl schmelzbarer Trennelemente (54) höher ist als die Anzahl struktureller Trennelemente (72).

4. Entkopplungsvorrichtung nach Anspruch 1, **dadurch gekennzeichnet, dass** die Anzahl schmelzbarer Trennelemente (54) kleiner ist als die Anzahl struktureller Trennelemente (72).

5. Entkopplungsvorrichtung nach einem der Ansprüche 1 bis 4, **dadurch gekennzeichnet, dass** die schmelzbaren Trennelemente und die strukturellen Trennelemente an/auf einem kreisförmigen Flansch (52) verteilt sind, und dass die schmelzbaren Trennelemente (54) und die strukturellen Trennelemente (72) einer regelmäßigen alternierenden Verteilung zumindest längs einer Mittellinie (40,41) des Flansches (52) folgen.

6. Entkopplungsvorrichtung nach Anspruch 5, **dadurch gekennzeichnet, dass** sich jedes schmelzbare Trenneiement (54) zwischen zwei strukturellen Trennelementen (72) befindet.

7. Entkopplungsvorrichtung nach Anspruch 5, **dadurch gekennzeichnet, dass** die schmelzbaren Trennelemente (54) in Paaren gruppiert sind und die strukturellen Trennelemente (72) in Paaren gruppiert sind und sich jedes Paar schmelzbarer Trennelemente (54) zwischen zwei Paaren struktureller Trennelemente (72) befindet.

8. Entkopplungsvorrichtung nach einem der Ansprüche 5 bis 7, **dadurch gekennzeichnet, dass** alle Trennelemente, schmelzbare (54) und strukturelle (72), längs der gleichen Mittellinie (40) des Flansches (52) verteilt sind.

9. Entkopplungsvorrichtung nach einem der Ansprüche 5 bis 7, **dadurch gekennzeichnet, dass** sich alle schmelzbaren Trennelemente (54) auf einer ersten Mittellinie (40) des Flansches (52) befinden und dass sich alle strukturellen Trennelemente (72) auf einer zweiten Mittellinie (41) des Flansches (52) befinden, wobei die beiden Mittellinien (40,41) konzentrisch sind.

10. Entkopplungsvorrichtung nach einem der Ansprüche 1 bis 9, **dadurch gekennzeichnet, dass** die strukturellen Trennelemente (72) eine höhere Starrheit bzw. Steifigkeit aufweisen als die schmelzbaren Trennelemente (54).

11. Entkopplungsvorrichtung nach einem der Ansprüche 1 bis 10, **dadurch gekennzeichnet, dass** die strukturellen Trennelemente (72) eine massivere Geometrie aufweisen als die schmelzbaren Trennelemente (54).

12. Entkopplungsvorrichtung nach einem der Ansprüche 1 bis 11, **dadurch gekennzeichnet, dass** die ersten schmelzbaren Trennelemente erste schmelzbare Schrauben (54) sind und die zweiten strukturellen Trennelemente zweite strukturelle Schrauben (72) sind.

13. Entkopplungsvorrichtungnach Anspruch 12, **dadurch gekennzeichnet, dass** die ersten schmelzbaren Schrauben (54) zwischen ihrem Kopf (56) und ihrem Gewinde (58) eine zerbrechliche bzw. zerreißbare Zone (64) aufweisen, die als Angriffspunkt des Zerreißens bei Zug dient.

14. Entkopplungsvorrichtung nach Anspruch 13, **dadurch gekennzeichnet, dass** die zerbrechliche Zone (64) einen Abschnitt reduzierten Querschnitts umfasst.

15. Entkopplungsvorrichtung nach Anspruch 13, **dadurch gekennzeichnet, dass** die zerbrechliche Zone (64) einen Abschnitt umfasst, an dem durch Bohren ein Materialabtrag erfolgt ist.

16. Entkopplungsvorrichtung nach Anspruch 13, **dadurch gekennzeichnet, dass** die zerbrechliche Zone (64) durch Anwendung einer lokalen Wärmebehandlung erhalten wird.

17. Entkopplungsvorrichtung nach einem der Ansprüche 1 bis 11, **dadurch gekennzeichnet, dass** die ersten schmelzbaren Trennelemente erste schmelzbare Nieten sind und die zweiten strukturellen Trennelemente zweite strukturelle Nieten sind.

18. Entkopplungsvorrichtung nach einem der Ansprüche 1 bis 11, **dadurch gekennzeichnet, dass** die ersten schmelzbaren Trennelemente erste schmelzbare Bolzen sind und die zweiten strukturellen Trennelemente zweite strukturelle Bolzen sind.

## Claims

1. Tension decoupler device connecting two parts (14, 15) of a structure and fitted with rupture members (54, 72), the rupture of which cause decoupling of said parts (14, 15) when they break, **characterized in that** it comprises:
- a first set of first rupture members called fusible rupture members (54), arranged to be parallel to each other,
- a second set of second rupture members called structural rupture members (72), arranged to be parallel to each other and parallel to the first fusible rupture members (54),
and **in that** said first fusible rupture members (54) and said second structural rupture members (72) are designed to break only when the load applied to the decoupler device reaches a given predetermined load value, and said second structural rupture members (72) are designed to have sufficient fatigue strength as long as said applied load does not reach said predetermined load value.

2. Decoupler device according to claim 1, **characterised in that** the number of fusible rupture members (54) is the same as the number of structural rupture members (72).

3. Decoupler device according to claim 1, **characterised in that** the number of fusible rupture members (54) is greater than the number of structural rupture members (72).

4. Decoupler device according to claim 1, **characterised in that** the number of fusible rupture members (54) is less than the number of structural rupture members (72).

5. Decoupler device according to any one of claims 1 to 4, **characterised in that** the fusible rupture members and the structural rupture members are distributed around a circular flange (52) and **in that** the fusible rupture members (54) and the structural rupture members (72) follow a regular alternating distribution along at least one average line (40, 41) of said flange (52).

6. Decoupler device according to claim 5, **characterised in that** each fusible rupture member (54) is located between two structural rupture members (72).

7. Decoupler device according to claim 5, **characterised in that** the fusible rupture members (54) are grouped in pairs, and the structural rupture members (72) are grouped in pairs, and each pair of fusible rupture members (54) is located between two pairs of structural rupture members (72).

8. Decoupler device according to any one of claims 5 to 7, **characterised in that** all the fusible rupture members (54) and structural rupture members (72) are distributed around a same average line (40) of the flange (52).

9. Decoupler device according to any one of claims 5 to 7, **characterised in that** all the fusible rupture members (54) are located on a first average line (40) of the flange (52) and **in that** all the structural rupture members (72) are located on a second average line (41) of the flange (52), the two average lines (40, 41) being concentric.

10. Decoupler device according to any one of claims 1 to 9, **characterised in that** the structural rupture members (72) are stiffer than the fusible rupture members (54).

11. Decoupler device according to any one of claims 1 to 10, **characterised in that** the shape of the structural rupture members (72) is thicker than the shape of the fusible rupture members (54).

12. Decoupler device according to any one of claims 1 to 11, **characterised in that** the first fusible rupture members are first fusible screws (54) and the second structural rupture members are second structural screws (72).

13. Decoupler device according to claim 12, **characterised in that** the first fusible screws (54) comprise an zone of weakness (64) between their head (56) and their thread (58), that initiates a tensile rupture.

14. Decoupler device according to claim 13, **characterised in that** the zone of weakness (64) comprises a portion with a reduced cross-section.

15. Decoupler device according to claim 13, **characterised in that** the zone of weakness (64) comprises a portion from which material has been removed by drilling.

16. Decoupler device according to claim 13, **characterised in that** the zone of weakness (64) is obtained by application of local heat treatment.

17. Decoupler device according to any one of claims 1 to 11, **characterised in that** the first fusible rupture members are first fusible rivets and the second structural rupture members are second structural rivets.

18. Decoupler device according to any one of claims 1 to 11, **characterised in that** the first fusible rupture members are first fusible bolts and the second structural rupture members are second structural bolts.
